Europäisches Patentamt

European Patent Office

Office européen des brevets

(19)

(11) Publication number : **0 580 370 A1**

(12) **EUROPEAN PATENT APPLICATION**

(21) Application number : 93305610.3

(22) Date of filing : 16.07.93

(51) Int. Cl.$^5$ : **C08K 9/06,** C08K 3/36, C08L 21/00

(30) Priority : 20.07.92 JP 191944/92

(43) Date of publication of application :
26.01.94 Bulletin 94/04

(84) Designated Contracting States :
DE FR GB IT

(71) Applicant : SUMITOMO RUBBER INDUSTRIES LIMITED
No. 1-1, Tsutsui-cho 1-chome
Chuo-ku Kobe-shi Hyogo 651 (JP)

(72) Inventor : Sekido, Fumio
7-13-2, Takaoka, Okubo-cho
Akashi-shi, Hyogo-ken (JP)
Inventor : Hara, Seiji
3-704-4, Kotobuki-cho
Tondabayashi-shi, Osaka-fu (JP)
Inventor : Ichikawa, Naoya
Sumitomogomu Kobu-ryo, 1-1-23,
Hinokuchi-cho
Nishinomiya-shi, Hyogo-ken (JP)

(74) Representative : Allard, Susan Joyce et al
BOULT, WADE & TENNANT 27 Furnival Street
London EC4A 1PQ (GB)

(54) **High rubber damping composition.**

(57) A rubber composition having a high damping property, a small dependence of elastic modulus on temperature, and excellent fracture properties, which is suitable for decreasing transmission of vibration energy and damping and absorbing vibration energy. The rubber composition comprises a surface treated anhydrous fumed or precipitated hydrated silica based on 100 parts by weight of a base rubber having C-C bonds in the main chain thereof, the silica satisfying the relationships :

$$30 \leqq X \leqq 400, \quad 0.07 \leqq Y \leqq 1.3,$$

and

$$Y \leqq -2.07 \ln(X) + 1.40 X^{0.276} + 5.29$$

wherein X is the specific surface area (m$^2$/g) and Y is the silanol concentration (number of silanol groups/nm$^2$).

Fig. 1

EP 0 580 370 A1

The present invention relates to a rubber composition having a high vibration damping property, a small dependence of elastic modulus on temperature, and excellent fracture properties. The rubber composition is suitable for decreasing the transmission of vibration energy and absorbing and damping vibration energy. It is particularly effective when used at extremely severe temperature (e.g. -30°C).

With the progress of industry in recent years, techniques for decreasing noise and vibration have been required in various fields such as industrial machines, domestic electrical equipment, office appliances, wheeled vehicles, multistory buildings, main tower of bridges, automobiles etc., and its importance is increasing. A rubber composition having a high damping property is generally used in equipment for decreasing the transmission of energy and for absorbing energy.

The damping rubber composition generally contains a large amount of carbon black and optionally contains a softening agent, a plasticizer and/or a resin in a large amount. It may contain a polymer having a high glass transition point, such as high-styrene SBR.

However, the inclusion of a large amount of carbon black causes deterioration of workability upon kneading and molding. The inclusion of the softening agent or plasticizer causes deterioration of the damping properties. Furthermore, when a large amount of the resin is included or a polymer having high glass transition point is used, the resulting rubber composition has a large dependence of elastic modulus on temperature and shows no stable properties upon practical use.

Hitherto, a silicone rubber has been used as the main rubber component of rubber compositions having a high damping property and small dependence of elastic modulus on temperature. However, this rubber composition has a disadvantage in its fracture properties (e.g. low tensile strength, low shear strength, low shear elongation, etc.).

Under these circumstances, it is important to obtain a rubber composition having a small dependence of elastic modulus on temperature, excellent fracture properties, a high damping capacity and cold resistance, which can be used over a wide temperature range, because requests for equipment for decreasing the transmission of energy and for absorbing energy are increasing.

We have now developed a rubber composition having a high damping capacity, a small dependence of elastic modulus on temperature and excellent fracture properties, as well as excellent workability upon unvulcanization.

According to the present invention, there is provided a rubber composition comprising a surface treated anhydrous fumed or precipitated hydrated silica based on 100 parts by weight of a base rubber having C-C bonds in the main chain thereof, the silica satisfying the relations:

$$30 \leqq X \leqq 400, \ 0.07 \leqq Y \leqq 1.3,$$

and

$$Y \leqq -2.07 \ln(X) + 1.40X^{0.276} + 5.29$$

wherein X is the specific surface area ($m^2/g$) and Y is the silanol concentration (number of silanol groups/$nm^2$).

Silica is normally referred to as "white carbon", and its surface has a high polarity and hydrophilic nature due to the presence of silanol groups and, therefore, it is inferior in wetting and dispersibility with rubber. Furthermore, the silica surface adsorbs a vulcanization accelerator to delay vulcanization, and the silica forms a gel with a rubber upon kneading to deteriorate workability, whereby, it has been difficult to provide silica for practical formulations. The above-mentioned problem has been solved by using a silica wherein the silanol groups of the silica surface are changed to hydrophobic functions by treating it with a silane compound. This is because the number of silanol groups of the silica surface decreases by a condensation reaction of the silane compound with the silica, which results in a decrease of vulcanization delay and gelation. The agglomeration of silica particles also decreases, which results in an improvement of dispersibility. Accordingly, it is possible to obtain a rubber composition having an improved workability upon kneading and molding, improved vulcanization properties and a small dependence of elastic modulus on temperature.

On the contrary, a decrease in the silanol groups causes a deterioration of the damping capacity. Therefore, it is necessary to determine a suitable range of specific surface areas and silanol concentration.

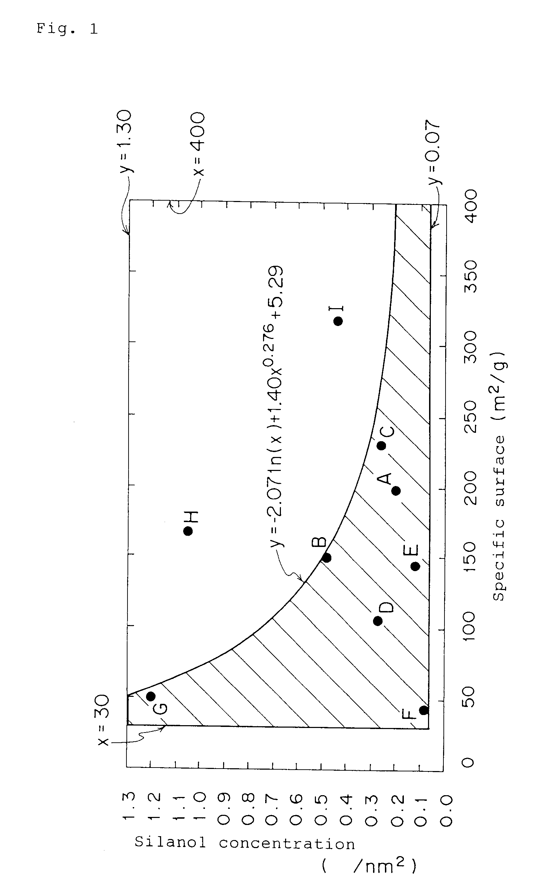

It is preferred that an anhydrous fumed or precipitated hydrated silica which has been surface treated with various silane compounds has a specific surface area and silanol concentration within the domain shown in Fig 1. The silica is preferably formulated in the rubber composition in an amount of from 30 to 160 parts by weight, more preferably from 40 to 120 parts by weight based on 100 parts by weight of a base rubber. The resulting rubber composition is superior in its damping properties, dependence of elastic modulus on temperature, adhesion to metals, fracture properties and workability upon unvulcanization. Accordingly, the composition is suitable for vibration proofing rubber materials for absorbing and decreasing vibration energy. Furthermore, in the present specification, the term "excellent dependence on temperature" means that a ratio of dynamic shear storage elastic modulus (-30°/30°C) is not more than 2.7, and the term "excellent damping capacity" means that tan $\delta$ at 30°C is not less than 0.05.

Examples of the base rubber used in the present invention are natural rubbers and synthetic rubbers. The synthetic rubber may be, for example, polyisoprene rubber, polybutadiene rubber, butyl rubber, styrene-butadiene rubber, ethylene-propylene rubber, acrylonitrile-butadiene rubber or mixtures thereof. Polybutadiene rubber, natural rubber and polyisoprene rubber are preferred.

The anhydrous fumed or precipitated hydrated silica used in the present invention is one in which surface is treated with a silane compound, which satisfies the following relationships:

$$30 \leqq X \leqq 400$$
$$0.07 \leqq Y \leqq 1.3$$
$$Y \leqq -2.07 \ln(X) + 1.40 X^{0.276} + 5.29$$

wherein X is the specific surface area (m²/g) and Y is the silanol concentration (number of silanol groups/nm²).

Examples of the silane compound used for the surface treatment include methyltrimethoxysilane, methyltriethoxysilane, methyldiethoxysilane, dimethyldimethoxysilane, dimethyldiethoxysilane, dimethylethoxysilane, trimethylmethoxysilane, trimethylethoxysilane, isobutyltrimethoxysilane, n-decyltrimethoxysilane, phenyltrimethoxysilane, phenyltriethoxysilane, diphenyltrimethoxysilane, diphenyldiethoxysilane, diphenyldimethoxysilane, triphenylethoxysilane, hexyltrimethoxysilane, octadecylmethyldimethoxysilane, octadecyltriethoxysilane, octadecyltrimethoxysilane, tridecafluorooctyltrimethoxysilane, trifluoropropyltrimethoxysilane, heptaadecafluorodecylmethyldimethoxysilane, heptaadecafluorodecyltrimethoxysilane, cyclohexylmethyldimethoxysilane, hexamethyldisilazane, octamethylcyclotetrasilazane, nonamethyltrisilazane, methyltrichlorosilane, methyldichlorosilane, dimethyldichlorosilane, dimethylchlorosilane, dimethylbutylchlorosilane, dimethyloctadecylchlorosilane, trimethylchlorosilane, phenyltrichlorosilane, diphenyldichlorosilane, triphenylchlorosilane, tri-n-propylchlorosilane, methyldiphenylchlorosilane, methylphenyldichlorosilane, n-butyldimethylchlorosilane, t-butyldimethylchlorosilane, t-butyldiphenylchlorosilane, chloromethyldimethylchlorosilane, chloromethyltrimethylsilane, 3-chloropropylmethyldimethoxysilane, 3-chloropropylmethyldiethoxysilane, 3-chloropropyltrimethoxysilane, 3-chloropropyltris(trimethylsiloxy)silane, diphenylsilanediol, trichloroethylsilane, heptadecafluorodecylmethyldichlorosilane, heptadecafluorodecyltrichlorosilane, heptadecafluorodecylmethyldichlorosilane, octadecyldimethylchlorosilane, octadecylmethyldichlorosilane, octadecyltrichlorosilane, tri-n-butylchlorosilane, tridecafluorooctyltrichlorosilane and triethylchlorosilane. The surface treatment of the silica is conducted by adding the above silane compound to the silica, heating at 100 to 200°C and stirring to condense the silica with the silane compound.

The specific surface area (X) is measured by a gas phase adsorption method wherein nitrogen gas is used as an adsorption gas (e.g. rapid surface measuring equipment SA-1000 manufactured by Shibata Kagaku Kikai Kogyo Co.). The silanol concentration is measured by using an automatic potentiometric titration equipment (AT-310, manufactured by Kyoto Denshi Kogyo Co.).

Silica which satisfies the above specific surface are and silanol concentration is commercially available, and examples thereof include Aerosil R812S, R805, R812, R972, RX200, RX50 and OX50 manufactured by Nippon Aerosil Co. When the specific surface area (X) is not in the above range, the dispersion in the rubber becomes inferior. When the silanol concentration (Y) is not in the above range, gelation of the rubber upon kneading becomes large and vulcanization is extremely delayed. The amount of the surface treated silica is from 30 to 160 parts by weight, preferably from 40 to 120 parts by weight, based on 100 parts by weight of the base rubber. When the amount is less than 30 parts by weight, the damping effect is reduced. On the contrary, when the amount exceeds 160 parts by weight, it becomes difficult to knead with the rubber.

Vulcanizing agents (e.g. sulfur, etc.), vulcanization accelerators, vulcanization aids (e.g. stearic acid, zinc oxide, etc.), antioxidants, carbon black, fillers, softening agents and tackifiers may be optionally added to the rubber composition of the present invention. The vulcanizing agent may be included in an amcunt of from 0.3 to 5 parts by weight, based on 100 parts by weight of the base rubber. The vulcanization accelerator may be included in an amount of 0.3 to 4 parts by weight, based on 100 parts by weight of the base rubber. Further, the vulcanization aid may be included in an amount of from 1 to 6 parts by weight, based on 100 parts by weight of the base rubber. The total amount of optional additives is from 5 to 100 parts by weight, based on 100 parts by weight of the base rubber.

In the rubber composition of the present invention, the above components are kneaded together and then vulcanized at a temperature of 140 to 180°C for a predetermined time.

As described above, the high damping rubber composition of the invention has high damping capacity, small dependence of elastic modulus on temperature and excellent fracture properties and, therefore, it is effective for a rubber material for various damping equipments.

EXAMPLES

The following Examples and Comparative Examples further illustrate the present invention in detail but are not to be construed to limit the scope thereof.

Examples 1 to 11 and Comparative Examples 1 to 4

By using a silica shown in Table 1, a rubber composition shown in Tables 2 to 5 was kneaded, respectively, and then the composition was subjected to press vulcanization at 150°C for a predetermined time to measure various physical properties of the resulting vulcanized rubber.

Physical properties of the rubber composition of the present invention and measuring method thereof are as follows.

Physical properties: Tensile strength (kgf/cm$^2$ ), elongation (%), shear deformation (%), shear strength (kgf/cm$^2$), dynamic shear storage modulus (G*) and tan $\delta$.

Measuring method: Tensile strength (kgf/cm$^2$) and elongation (%) are determined according to JIS K6301.

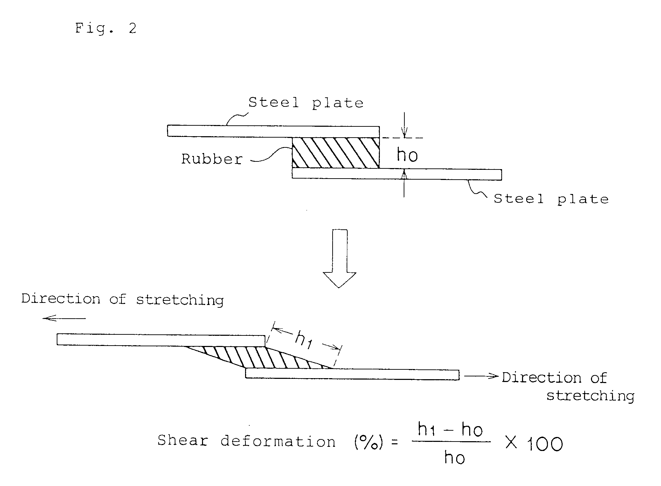

Shear deformation (%) and shear strength (kgf/cm$^2$) are determined by testing a specimen as shown in Fig 2. A vulcanization behavior of the rubber composition was measured by a curastometer JSR (IIID type) manufactured by Nichigo Shoji Co.

Dynamic viscoelastic physical properties were measured by a hydropulse fatigue testing machine PSA-015 manufactured by Tokyo Koki Seizosho Co.

The measuring conditions are as follows.

Frequency: 0.5 Hz

Shear strain: ±50 %

Temperature: 30°C and -30°C

Further, high damping silicone rubbers of Comparative Examples 3 and 4 are shown in Table 6.

## Table 1

| Silica | Specific surface area $(m^2/g)$ | Silanol concentration $(/nm^2)$ | Remarks |
|---|---|---|---|
| A | 198 | 0.20 | Aerosil R812S*1 |
| B | 150 | 0.48 | Aerosil R805 |
| C | 230 | 0.26 | Aerosil R812 |
| D | 105 | 0.27 | Aerosil R972 |
| E | 145 | 0.12 | Aerosil RX200 |
| F | 43 | 0.08 | Aerosil RX50 |
| G | 50 | 1.20 | Aerosil OX50 |
| H | 167 | 1.05 | Aerosil MOX170 |
| I | 317 | 0.44 | *2 |

*1: manufactured by Nippon Aerosil Co.

*2: 5 Parts by weight of hexamethyldisilazane was added to 100 parts by weight of Aerosil 380 to conduct nitrogen substitution. Thereafter, the mixture was heated to 120°C with stirring and stirred at 120°C for 30 minutes. After cooling, it was taken out and sprayed with water and then allowed to stand for 24 hours, followed by drying in a drying machine at 120°C for 2 hours to give a silica I.

EP 0 580 370 A1

Table 2

|  | Example 1 | Example 2 | Example 3 | Example 4 |
|---|---|---|---|---|
| **Formulation (phr)** | | | | |
| Natural rubber | 100 | 100 | 100 | 100 |
| Silica A | 60 | – | – | – |
| Silica B | – | 80 | – | – |
| Silica C | – | – | 80 | – |
| Silica D | – | – | – | 80 |
| Process oil | 10 | 5 | 5 | 5 |
| DOA | – | 7.5 | 7.5 | 7.5 |
| Zinc oxide | 4 | 4 | 4 | 4 |
| Stearic acid | 1 | 1 | 1 | 1 |
| Antioxidant | 3 | 3 | 3 | 3 |
| Sulfur | 2 | 2 | 2 | 2 |
| Vulcanization accelerator*a | 1 | 1 | 1 | 1 |
| **Fracture properties** | | | | |
| Tensile strength ($kgf/cm^2$) | 227 | 172 | 174 | 200 |
| Elongation (%) | 890 | 830 | 830 | 680 |
| Shear deformation (%) | 580 | 550 | 570 | 520 |
| Shear strength ($kgf/cm^2$) | 70 | 60 | 60 | 84 |
| Torque value on uncrosslinking (kgf-cm, 150°C) | 1.8 | 4.0 | 6.2 | 6.9 |
| **Dynamic viscoelastic properties** | | | | |
| Tan $\delta$ (30°C) | 0.20 | 0.23 | 0.32 | 0.25 |
| Shear storage modulus G ($kgf/cm^2$), 30°C | 5.9 | 6.8 | 8.7 | 9.6 |
| Ratio of -30°C/30°C | 2.08 | 1.94 | 2.18 | 1.85 |

*a: Oxydiethylene 2 benzothiazole sulfenamide

EP 0 580 370 A1

Table 3

| | Example 5 | Example 6 | Example 7 | Example 8 | Example 9 |
|---|---|---|---|---|---|
| Formulation (phr) | | | | | |
| Polyisoprene rubber* | 100 | – | – | – | 60 |
| Polybutadiene rubber*1 | – | 100 | – | – | 40 |
| Natural rubber | – | – | 100 | 100 | – |
| Silica D | 60 | – | – | 40 | 56 |
| Silica E | – | 90 | – | – | – |
| Silica C | – | – | 40 | – | – |
| Process oil | 15 | 20 | 5 | 5 | 15 |
| Zinc oxide | 4 | 4 | 4 | 4 | 4 |
| Stearic acid | 1 | 1 | 1 | 1 | 1 |
| Antioxididant | 2 | 2 | 2 | 2 | 2 |
| Sulfur | 2 | 1.8 | 2 | 2 | 1.8 |
| Vulcanization accelerator*a | 1 | 1 | 1 | 1 | 1 |
| Vulcanization accelerator*b | – | 0.8 | – | – | 0.8 |
| Fracture properties | | | | | |
| Tensile strength (kgf/cm$^2$) | 215 | 160 | 214 | 250 | 200 |
| Elongation (%) | 850 | 820 | 860 | 850 | 850 |
| Shear deformation (%) | 570 | 700 | 570 | 540 | 750 |
| Shear strength (kgf/cm$^2$) | 80 | 58 | 70 | 67 | 70 |
| Torque value on uncrosslinking (kgf-cm, 150°C) | 2.4 | 5.0 | 1.9 | 1.7 | 3.1 |
| Dynamic viscoelastic properties | | | | | |
| Tan δ (30°C) | 0.20 | 0.29 | 0.16 | 0.10 | 0.16 |
| Shear storage modulus G (kgf/cm$^2$), 30°C | 10.8 | 13.8 | 5.6 | 6.5 | 7.6 |
| Ratio of -30°C/30°C | 2.0 | 1.51 | 1.65 | 1.40 | 1.73 |

*b: Tetrabutylthiuram disulfide
*: Calliflex 309 manufactured by Shell Chemical Co.
*1: Diene BR55 manufactured by Asahi Chemical Industry Co.

EP 0 580 370 A1

Table 4

|  | Example 10 | Example 11 |
|---|---|---|
| **Formulation (phr)** | | |
| Natural rubber | 100 | 100 |
| Silica F | 80 | – |
| Silica G | – | 80 |
| Process oil | 15 | 15 |
| Zinc oxide | 4 | 4 |
| Stearic acid | 1 | 1 |
| Antioxidant | 2 | 2 |
| Sulfur | 2 | 2 |
| Vulcanization accelerator*a | 1 | 1 |
| **Fracture properties** | | |
| Tensile strength ($kgf/cm^2$) | 184 | 190 |
| Elongation (%) | 770 | 850 |
| Shear deformation (%) | 655 | 680 |
| Shear strength ($kgf/cm^2$) | 74 | 80 |
| Torque value on uncrosslinking ($kgf$-cm, 150°C) | 1.8 | 2.0 |
| **Dynamic viscoelastic properties** | | |
| Tan $\delta$ (30°C) | 0.10 | 0.12 |
| Shear storage modulus G ($kgf/cm^2$), 30°C | 5.6 | 6.0 |
| Ratio of -30°C/30°C | 1.64 | 1.7 |

## Table 5

| | Comp. Example 1 | Comp. Example 2 |
|---|---|---|
| **Formulation (phr)** | | |
| Natural rubber | 100 | 100 |
| Silica H | 40 | – |
| Silica I | – | 40 |
| Process oil | 5 | 5 |
| Zinc oxide | 4 | 4 |
| Stearic acid | 1 | 1 |
| Antioxidant | 2 | 2 |
| Sulfur | 2 | 2 |
| Vulcanization accelerator*a | 1 | 1 |
| **Fracture properties** | | |
| Tensile strength ($kgf/cm^2$) | 180 | 175 |
| Elongation (%) | 780 | 750 |
| Shear deformation (%) | | |
| Shear strength ($kgf/cm^2$) | | |
| Torque value on uncrosslinking ($kgf$-$cm$, 150°C) | 13.0 | 17.9 |
| **Dynamic viscoelastic properties** | | |
| Tan $\delta$ (30°C) | 0.26 | 0.29 |
| Shear storage modulus G ($kgf/cm^2$), 30°C | 12.8 | 12.8 |
| Ratio of -30°C/30°C | 1.90 | 2.20 |

Table 6

| Fracture properties | Comp. Example 3 Silicone rubber A | Comp. Example 4 Silicone rubber B |
|---|---|---|
| Tensile strength ($kgf/cm^2$) | 63 | 86 |
| Elongation (%) | 570 | 620 |
| Shear deformation (%) | 400 | 440 |
| Shear strength ($kgf/cm^2$) | 37 | 42 |
| **Dynamic viscoelastic properties** | | |
| Tan w (30°C) | — | 0.23 |
| Shear storage modulus G ($kgf/cm^2$), 30°C | — | 4.8 |
| Ratio of -30°C/30°C | — | 1.72 |

Silicone rubber A
KE5560 base (manufactured by Shinetsu Kagaku Co.) 100 (parts by weight)
2,5-Dimethyl-2,5-bis(t-butylperoxy)hexane 2
Vulcanization temperature: 170°C
Vulcanization time: 30 minutes

Silicone rubber B
KE5550 base (manufactured by Shinetsu Kagaku Co.) 100 (parts by weight)
2,5-Dimethyl-2,5-bis(t-butylperoxy)hexane 2
Vulcanization temperature: 170°C
Vulcanization time: 30 minutes

In Examples 1 to 11, a silica which satisfies the relations in the claim of the present invention is used. On the other hand, regarding a silica used in Comparative Examples 1 and 2, neither specific surface nor silanol concentration is not in the domain of oblique line shown in Fig 1. In Comparative Examples 1 and 2, torque upon uncrosslinking is extremely high and workability of kneading, calendering, extrusion and the like is inferior. Further, vulcanization is extremely delayed and, therefore, it is not suitable for practical formulation.

On the other hand, in Examples 1 to 11, torque upon uncrosslinking is low, and Tan δ as an indication of damping is high such as 0.10 to 0.32). Further, dependence of elastic modulus on temperature, i.e. elastic modulus ratio of -30°C/30°C shows low value such as 1.50 to 2.18. When the specific surface is less than 30 m²/g (e.g. 3 m²/g), damping effect can not be obtained. Further, it is impossible to make a vulcanized rubber having a silanol group concentration of not more than 0.07/nm².

Hitherto, a silicone rubber has been used as a rubber having high damping capacity and excellent dependence of elastic modulus on temperature. However, the rubber had a disadvantage that fracture strength is low (e.g. low tensile strength, low shear strength, low shear deformation, etc.).

It is apparent that Examples 1 to 11 is superior in tensile strength, shear strength and shear deformation which serve as an indication of fracture properties in comparison with Comparative Examples 3 and 4.

As described above, a rubber composition, wherein an anhydrous fumed or precipitated hydrated silica having specific surface and silanol concentration in the domain of oblique line shown in Fig 1 is used, has no disadvantage of a rubber composition wherein conventional silica is used. The rubber composition of the present invention has excellent fracture properties, high damping capacity and small dependence of elastic modulus on temperature in comparison with a conventional high damping rubber composition.

**Claims**

1. A rubber composition comprising a surface treated anhydrous fumed or precipitated hydrated silica based on 100 parts by weight of a base rubber having C-C bonds in the main chain thereof, the silica satisfying the relationships:

$$30 \leqq X \leqq 400, \ 0.07 \leqq Y \leqq 1.3,$$

and

$$Y \leqq -2.07 \ln(X) + 1.40X^{0.276} + 5.29$$

wherein X is the specific surface area ($m^2/g$) and Y is the silanol concentration (number of silanol groups/$nm^2$).

2. A rubber composition as claimed in claim 1, wherein the silica is, Aerosil R812S, R80S, R805, R812, RX200, RX50 or 0X50.

3. A rubber composition as claimed in claim 1 or claim 2 wherein the amount of the silica is from 30 to 160 parts by weight based on 100 parts of the base rubber.

4. A rubber composition as claimed in any one of the preceding claims wherein the base rubber is natural rubber, polyisoprene rubber, polybutadiene rubber, butyl rubber, styrene-butadiene rubber, ethylene-propylene rubber, acrylonitrile-butadiene rubber or mixtures thereof.

6. A rubber composition as claimed in any one of the preceding claims wherein the silica is surface treated with a silane compound.

Fig. 1

Fig. 2

Steel plate

Rubber

$ho$

Steel plate

Direction of stretching

$h_1$

Direction of stretching

$$\text{Shear deformation } (\%) = \frac{h_1 - h_o}{h_o} \times 100$$

EP 0 580 370 A1

## European Patent Office

## EUROPEAN SEARCH REPORT

Application Number

EP 93 30 5610

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 114, no. 22, 1990, Columbus, Ohio, US; abstract no. 209061n, HARADA T. ET AL. 'HARMLESS RUBBER COMPOSITIONS' * abstract * & JP-A-2 261 841 (KINUGAWA RUBBER INDUSTRY CO.,LTD.) 24 October 1990 | 1-6 | C08K9/06 C08K3/36 C08L21/00 |
| X | CHEMICAL ABSTRACTS, vol. 117, no. 18, 1992, Columbus, Ohio, US; abstract no. 173198h, M.TAKASHIMA ET AL. 'HEAT-RESISTANT RUBBER COMPOSITIONS CONTAINING SILICA FILLERS' * abstract * & JP-A-4 126 738 (JAPAN SYNTHETIC RUBBER CO.,LTD.) 27 April 1992 | 1,3-4,6 | |
| | ----- | | TECHNICAL FIELDS SEARCHED (Int. Cl.5) C08K |

The present search report has been drawn up for all claims

| Place of search | Date of completion of the search | Examiner |
|---|---|---|
| THE HAGUE | 18 OCTOBER 1993 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)